# EUROPÄISCHE PATENTSCHRIFT

(11) **EP 0 591 638 B1**
(45) Veröffentlichungstag und Bekanntmachung des Hinweises auf die Patenterteilung: **25.06.1997**
(21) Anmeldenummer: 93112307.9
(22) Anmeldetag: 31.07.1993
(51) Int. Cl.: H04N 5/44, H03J 1/00

(54) **Verfahren zur Speicherung der Einstellwerte für die Bild- und Tonwiedergabe von Fernsehempfängern**
Procedure for storage of picture and sound adjustments in television receivers
Procédé pour le stockage des données d'ajustement d'image et de son dans récepteurs de télévision

(30) Priorität: 08.10.1992 DE 4233900
(43) Veröffentlichungstag der Anmeldung: 13.04.1994
(73) Patentinhaber: GRUNDIG Aktiengesellschaft, 90762 Fürth (DE)
(72) Erfinder: Rosenberger, Winfried, GRUNDIG E.M.V., D-90748 Fürth (DE)

(56) Entgegenhaltungen:
- EP-A- 0 136 060
- EP-A- 0 208 199
- DE-A- 2 804 296

## Beschreibung

Die Erfindung betrifft ein Verfahren zur Speicherung der Einstellwerte für die Bild- und Tonwiedergabe von Fernsehempfängern, wie beispielsweise Lautstärke, Helligkeit, Kontrast, Farbsättigung usw.

Es sind bereits Fernsehempfänger bekannt, bei denen derartige Verfahren realisiert sind. Beispielsweise sind Fernsehempfänger bekannt, die es ermöglichen, durch einen einzigen Tastendruck die genannten Einstellungen auf vom Hersteller vorgegebene Werte einzustellen.

Andere Fernsehempfänger ermöglichen es dem Benutzer, jedem zum Empfang eines Senders programmierten Programmplatz individuelle Einstellwerte zuzuordnen. Ein derartiger Fernsehempfänger ist aus der deutschen Patentschrift DE 28 04 296 C2 bekannt.

Aus der deutschen Offenlegungsschrift DE 35 24 455 A1 ist ein weiterer derartiger Fernsehempfänger bekannt, der es ebenfalls ermöglicht, individuelle Einstellwerte abzuspeichern. Allerdings werden nur für den ersten Programmplatz die bei der Einstellung während der ersten Inbetriebnahme des Fernsehgeräts vom Benutzer eingestellten Werte abgespeichert. Für die anderen Programmplätze werden nur die sich bei der ersten Einstellung zu den Einstellwerten des ersten Programmplatzes ergebenden Differenzwerte abgespeichert. Wird also beispielsweise der dritte Programmplatz gewählt, so ergeben sich die Einstellwerte aus den Einstellwerten des ersten Programmplatzes, zu denen die Differenzwerte des dritten Programmplatzes addiert werden.

Die bei den bekannten Fernsehempfängern realisierten Verfahren weisen jedoch den Nachteil auf, daß zur individuellen Einstellung aller Programmplätze ein langwieriger Einstellvorgang nötig ist. Zudem kann der Benutzer den Einstellvorgang nur dann durchführen, wenn er die Bedienungsanleitung studiert und die darin gegebenen Anweisungen befolgt. Außerdem ist es nötig, den Einstellvorgang jedesmal zu wiederholen, wenn eine geänderte Einstellung gewünscht wird.

Aufgabe der vorliegenden Erfindung ist es deshalb, ein Verfahren für einen Fernsehempfänger anzugeben, welches es einem Benutzer ermöglicht, die Abspeicherung neuer Einstellwerte ohne gesonderte Bedienvorgänge vorzunehmen.

Bei dem erfindungsgemäßen Verfahren gemäß Anspruch 1 wird diese Aufgabe dadurch gelöst, daß die jeweils aktuellen Grundeinstellwerte beim Ausschalten des Fernsehempfängers abgespeichert werden, falls sie vorgegebene Ober- bzw. Untergrenzwerte nicht über- bzw. unterschreiten.

Der Vorteil des erfindungsgemäßen Verfahrens liegt insbesondere darin, daß es dem Benutzer ohne zusätzliche Bedienvorgänge ermöglicht wird, die seinen aktuellen Bedürfnissen entsprechende Einstellung der Wiedergabeeigenschaften des Fernsehempfängers vorzunehmen. Durch die vorgegebenen Grenzwerte werden darüber hinaus Fehleinstellungen verhindert, wie sie auftreten können, wenn ungeübte Benutzer eine Einstellung der Wiedergabeeigenschaften vornehmen.

Das Verfahren nach Anspruch 2 hat den Vorteil, daß bereits bei der ersten Inbetriebnahme des nach dem erfindungsgemäßen Verfahren arbeitenden Fernsehempfängers eine brauchbare Bild- und Tonwiedergabe möglich ist, und daß die vorgegebenen Grundeinstellungen jederzeit wieder als Basiswerte für eine erneute individuelle Einstellung abgerufen werden können.

Ein nach dem Verfahren nach Anspruch 3 arbeitender Fernsehempfänger hat insbesondere den Vorteil, daß bei zentraler Ein/Ausschaltung mittels eines einzigen Netzschalters für eine Vielzahl von Fernsehempfängern, wie beispielsweise bei im Fachhandel zu Ausstellungszwecken aufgestellten Fernsehempfängern, die zum Zwecke der Ausstellung vorgenommenen Grundeinstellungen nicht verändert werden.

Nachfolgend wird die Funktion des erfindungsgemäßen Verfahrens näher erläutert.

Bei einem nach dem erfindungsgemäßen Verfahren arbeitenden Fernsehempfänger werden die Einstellwerte für die Bild- und Tonwiedergabe jeweils aus einem Grundeinstellwert, der für alle Programmplätze gültig ist, und den jeweiligen individuellen Einstellwerten, die jedem Programmplatz zugeordnet sind, gebildet. Die Grundeinstellwerte und die individuellen Einstellwerte sind in einem nichtflüchtigen Speicher gespeichert. Sind keine individuellen Einstellwerte vorhanden, so sind die Einstellwerte mit den Grundeinstellwerten identisch.

Bei der ersten Inbetriebnahme des nach dem erfindungsgemäßen Verfahren arbeitenden Fernsehempfängers werden zur Bild- und Tonwiedergabe herstellerseitig vorgegebene Grundeinstellwerte verwendet. Die herstellerseitig vorgegebenen Grundeinstellwerte sind in einem weiteren nichtflüchtigen und zudem unveränderbaren Speicher abgelegt und werden am Ende der Herstellung, vor Verlassen der Fertigung, aus dem unveränderbaren Speicher in den nichtflüchtigen Speicher für die Grundeinstellwerte übertragen. Dies kann beispielsweise durch Betätigen einer speziellen Funktionstaste der zum Fernsehempfänger gehörigen Fernbedienung erfolgen. Auf eine spezielle Funktionstaste kann verzichtet werden, wenn zur Übernahme der herstellerseitig vorgegebenen Grundeinstellwerte mehrere ohnehin vorhandene Tasten gleichzeitig betätigt werden müssen oder durch Eingabe einer Codenummer. Dieser Einstellvorgang kann auch dem Benutzer zugänglich gemacht werden, so daß dieser, falls die Einstellwerte für die Bild- und Tonwiedergabe einmal stark verstellt sein sollten, ohne größere Einstellvorgänge sofort eine brauchbare Einstellung der Bild- und Tonwiedergabe vornehmen kann.

Um Schwankungen der Bild- und Tonwiedergabe von Programmplatz zu Programmplatz zu vermeiden, wie sie beispielsweise durch einen unterschiedlichen Modulationsgrad der auf den Programmplätzen jeweils abgespeicherten Sender entstehen können, können jedem Programmplatz - falls nötig in einem gesonderten Einstellvorgang - individuelle Einstellwerte zugeordnet werden. Zusammen mit den Grundeinstellwerten bilden sie - wie oben erwähnt - die Einstellwerte für die Bild- und Tonwiedergabe. Die individuellen Einstellwerte stellen Differenzwerte dar, die die Abweichung der Bild- und Tondarstellung des jeweiligen Programmplatzes von den Grundeinstellwerten sind. Wurde auf einem Programmplatz beispielsweise ein Sender gelegt, dessen Tonsignale mit geringerer Lautstärke wiedergegeben werden als Tonsignale anderer Sender auf anderen Programmplätzen, so kann diese Abweichung durch eine individuelle Erhöhung des Lautstärkepegels ausgeglichen werden. Dazu ordnet der Benutzer dem betreffenden Programmplatz einen individuellen Einstellwert zu, der eine entsprechende Erhöhung des durch den Grundeinstellwert festgelegten Lautstärkepegels bewirkt.

Für den Fall, daß die Bild- und Tonwiedergabe, wie sie durch die herstellerseitig vorgegebenen Grundeinstellwerte festgelegt ist, nicht den Sehgewohnheiten des Benutzers entsprechen, kann dieser mittels entsprechender Bedieneinrichtungen die Bild- und Tonwiedergabe nach seinen Wünschen abändern. Die vorgenommenen Änderungen wirken sich nur auf die Grundeinstellwerte aus. Die den einzelnen Programmplätzen zugeordneten individuellen Einstellwerte bleiben unverändert. Beim Ausschalten des Fernsehempfängers mit Netztaste oder Bereitschaftsbetriebtaste werden die neuen Grundeinstellwerte automatisch in den nichtflüchtigen Speicher geschrieben, falls der geänderte Grundeinstellwert vorgegebene Ober- bzw. Untergrenzwerte, die im nichtflüchtigen und unveränderbaren Speicher gespeichert sind, nicht über- bzw. unterschreitet. Liegt der Wert innerhalb der vorgegebenen Grenzwerte, so wird der geänderte Grundeinstellwert im nichtflüchtigen Speicher abgespeichert. Somit wird die Bild- und Tonwiedergabe jederzeit den Bedürfnissen des Benutzers angepaßt, ohne daß dieser die geänderten Grundeinstellwerte mittels eines gesonderten Bedienvorgangs im nichtflüchtigen Speicher abspeichern muß.

Um die Abspeicherung neuer Grundeinstellwerte sicherzustellen, muß für die den Abspeichervorgang ausführenden Elemente des Fernsehempfängers, wie nichtflüchtiger Speicher und Mikrocomputer, nach Betätigen der Netztaste die Spannungsversorgung sichergestellt sein. Dies kann beispielsweise mittels einer Batterie oder mittels eines Kondensators erreicht werden.

Durch die Überprüfung der Grundeinstellwerte auf Über- bzw. Unterschreiten von Grenzwerten vor der Abspeicherung wird sichergestellt, daß Fehleinstellungen auch durch einen ungeübten Benutzer verhindert werden. Wird die Abspeicherung außerdem nur dann vorgenommen, wenn der Fernsehempfänger mittels Netztaste oder Bereitschaftsbetriebtaste ausgeschaltet wird, gehen Einstellungen von Fernsehempfängern nicht verloren, die mittels eines zentralen Netzschalters ein- und ausgeschaltet werden. Dies ist beispielsweise für Ausstellungsgeräte im Fachhandel von Bedeutung.

## Patentansprüche

1. Verfahren zur Speicherung der Einstellwerte für die Bild- und Tonwiedergabe von Fernsehempfängern mit einer Vielzahl von Programmplätzen, bei dem die Einstellwerte aus Grundeinstellwerten, die für alle Programmplätze gültig sind, und individuellen Einstellwerten, die jedem Programmplatz zugeordnet sind, gebildet werden,
**dadurch gekennzeichnet,**
daß aktuelle Änderungen der Einstellwerte durch den Benutzer nur die Grundeinstellwerte verändern, und daß die veränderten Grundeinstellwerte beim Ausschalten des Fernsehempfängers automatisch gespeichert werden, falls sie vorgegebene Ober- bzw. Untergrenzwerte nicht über- bzw. unterschreiten.

2. Verfahren nach Anspruch 1,
**dadurch gekennzeichnet,**
daß für die erste Inbetriebnahme des Fernsehempfängers Grundeinstellwerte vorgegeben sind, und daß die vorgegebenen Grundeinstellwerte jederzeit wieder abgerufen und eingestellt werden können.

3. Verfahren nach Anspruch 1,
**dadurch gekennzeichnet,**
daß die Abspeicherung der Grundeinstellwerte nur erfolgt, falls der Fernsehempfänger mit dem Netzschalter oder mit der Bereitschaftsbetriebtaste abgeschaltet wird.

## Claims

1. Method of storing the set values for the picture reproduction and sound reproduction of television receivers having a multiplicity of programme locations, in which the set values are formed from basic set values which are valid for all the programme locations and individual set values which are assigned to each programme location, characterized in that the existing changes in the set values made by the user alter only the basic set values and in that the altered basic set values are automatically stored when the television receiver is switched off, provided they do not exceed or are not below upper or lower limit values, respectively.

2. Method according to Claim 1, characterized in that basic set values are entered for the first time the television receiver is operated and in that the basic set values entered can be retrieved again at any time and adjusted.

3. Method according to Claim 1, characterized in that the basic set values are stored only if the television receiver is switched off by means of the mains switch or by means of the stand-by operation key.

## Revendications

1. Procédé pour mémoriser les valeurs de réglage pour la reproduction d'images et la reproduction du son dans des récepteurs de télévision comportant une multiplicité d'emplacements de programme, selon lequel les valeurs de réglage sont formées à partir de valeurs de réglage de base, qui sont valables pour tous les emplacements de programme, et à partir de valeurs de réglage individuelles, qui sont affectées à chaque emplacement de programme, caractérisé en ce que des modifications actuelles des valeurs de réglage exécutées par l'utilisateur modifient uniquement les valeurs de réglage de base et que les valeurs de réglage de base modifiées sont mémorisées automatiquement, lorsqu'on éteint le récepteur de télévision, dans le cas où ces valeurs ne dépassent par le haut ou par le bas des valeurs limites supérieure ou inférieure prédéterminées.

2. Procédé selon la revendication 1, caractérisé en ce que les valeurs de réglage de base sont prédéterminées pour la première mise en service du récepteur de télévision et que les valeurs de réglage de base prédéterminées peuvent être à nouveau appelées et réglées à tout moment.

3. Procédé selon la revendication 1, caractérisé en ce que la mémorisation des valeurs de réglage de base s'effectue uniquement dans le cas où une réception de télévision est débranchée à l'aide de l'interrupteur de raccordement au réseau ou à l'aide de la touche de mise en veille.
